(19) 

**Europäisches Patentamt**
**European Patent Office**
**Office européen des brevets**

(11) **EP 4 556 583 A1**

(12) **EUROPEAN PATENT APPLICATION**
published in accordance with Art. 153(4) EPC

(43) Date of publication:
**21.05.2025 Bulletin 2025/21**

(21) Application number: **22953914.3**

(22) Date of filing: **01.08.2022**

(51) International Patent Classification (IPC):
**C22B 1/16** *(2006.01)* **C21B 13/02** *(2006.01)*

(52) Cooperative Patent Classification (CPC):
**C21B 13/02; C22B 1/16**

(86) International application number:
**PCT/JP2022/029424**

(87) International publication number:
**WO 2024/028923 (08.02.2024 Gazette 2024/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **JFE Steel Corporation**
**Tokyo 100-0011 (JP)**

(72) Inventors:
• **HORITA Kenya**
**Tokyo 100-0011 (JP)**
• **YAMAMOTO Tetsuya**
**Tokyo 100-0011 (JP)**
• **HIGUCHI Takahide**
**Tokyo 100-0011 (JP)**

• **HIROSAWA Toshiyuki**
**Tokyo 100-0011 (JP)**
• **IWAMI Yuji**
**Tokyo 100-0011 (JP)**
• **TAKEHARA Kenta**
**Tokyo 100-0011 (JP)**
• **FUJIWARA Shohei**
**Tokyo 100-0011 (JP)**
• **IGAWA Daisuke**
**Tokyo 100-0011 (JP)**
• **MORITA Yuya**
**Tokyo 100-0011 (JP)**

(74) Representative: **Hoffmann Eitle**
**Patent- und Rechtsanwälte PartmbB**
**Arabellastraße 30**
**81925 München (DE)**

(54) **SINTERED ORE AND METHOD FOR PRODUCING SAME, AND SINTERED ORE FOR HYDROGEN REDUCTION AND METHOD FOR PRODUCING SAME**

(57) Provide is a sintered ore achieving both high reducibility and a low reduction-degradation property, and propose a method for producing the same. Further, provided is a sintered ore for hydrogen reduction and a method for producing the same. The sintered ore has a ratio $P_A/P_B$ of 0.23 or more, where $P_A$ represents a porosity (volume%), measured by mercury porosimetry, of particles of the sintered ore that have a size of 5 mm or more and are ground to an average particle size of 1 to 2 mm, and $P_B$ represents the porosity (volume%) of the particles of the sintered ore determined using an apparent density measured by an in-liquid weighing method using water, and using a real density, measured by a boiling method or a vacuum suction method, of the particles of the sintered ore that are ground and sieved into a particle size of less than 250 $\mu$m. The method for producing the sintered ore includes using a raw material including ore with a crystal water content of 4 mass% or greater. Further, the sintered ore for hydrogen reduction has a porosity ratio $P_A/P_B$ of 0.25 or more.

**(Cont. next page)**

EP 4 556 583 A1

[Fig. 1]

S0
Sintered Ore

S1
Sieving

**Micropores**

S11
Grind 1 to 2mm

S12
Mercury Porosimetry

S14
Pore Size $d_A$

S13
Porosity $P_A$

**Macropores**

Weigh Sintered Ore in Dry State

S21

S22
Weigh Sintered Ore in Water

S23
Grind Less than 0.25mm

S24
Real Density

S25
Porosity $P_B$

**Description**

Technical Field

The present invention relates to a sintered ore having a good balance of reducibility and a reduction-degradation property, and a method for producing the same, and a sintered ore for hydrogen reduction and a method for producing the same.

Background Art

The direct-reduction ironmaking method is known as an ironmaking method for reducing iron from a raw material containing iron oxide. The direct-reduction ironmaking method has been developed because of its advantages, such as low construction costs for plants for performing the method, easy operation of the method, and the feasibility of the method in a small-scale plant. In particular, various improvements have been made to direct-reduction shaft furnaces to effectively use a reducing gas in the furnaces.

For a stable operation of a direct-reduction shaft furnace, it is an important technical challenge to achieve both high reducibility and a low reduction-degradation property by securing a stable flow of a reducing gas and also securing the logistics of an iron oxide raw material. When an iron oxide raw material is reduced and powdered in the high-temperature zone in the lower part of the shaft furnace, ventilation resistance increases, the productivity of the vertical shaft furnace decreases, and the iron oxide raw material does not descend properly, which hinders production. The decrease in productivity resulting from the increase in ventilation resistance due to the reduction-degradation of an iron oxide raw material also occurs in the blast furnace method. However, unlike in the blast furnace method, in the direct-reduction ironmaking method in which an iron oxide raw material is reduced in a solid state and discharged, if a reduction-degradation phenomenon occurs during the process of reducing the iron oxide raw material in a solid particle state, the particles will be fused (referred to as clustering), which hinders the discharge of the material from the reduction furnace. Therefore, it is necessary to suppress the reduction and degradation of an iron oxide raw material more when using the direct-reduction ironmaking method than when using the blast furnace method.

To improve reducibility, for example, Patent Literature 1 discloses that, among pores remaining in a sintered ore, based on a pore size in the range of 2 to 5 mm, a pore having a larger pore size is determined as an open pore and a pore having a shorter pore size is determined as a closed pore. In particular, Patent Literature 1 discloses that closed pores having a pore size of 0.5 mm or less dominates reducibility.

In addition, Non Patent Literature 1 reports that the proportion and the structure of macropores through which a reducing gas is supplied to each texture play important roles in determining the overall reducibility of the sintered ore. In Non Patent Literature 1, pores with a shape close to a spherical shape having a pore size larger than about 50 $\mu$m are defined as macropores.

For such reasons, there have been an increasing number of reports about the analysis of pore structures. For example, a model for predicting porosity and a model for predicting the reduction index have been reported as in Non Patent Literatures 2 and 3.

Patent Literature 2 discloses a highly reducible sintered ore having, as a production index of a sintered ore for a blast furnace, a texture in which the proportion of fine pores having a pore size of 100 $\mu$m or less is 0.42 or more, the sintered ore being formed by adding an organic binder containing 3 mass% or more H and granulating the mixture.

Patent Literature 3 discloses that when a raw material for direct reduction such as pellets is reduced in a shaft furnace in terms of the quality during hydrogen reduction, reduction-degradation can be suppressed by providing the raw material and a coating layer covering the periphery of the raw material and having a porous structure with a porosity of 20 volume% or more.

Citation List

Patent Literature

Patent Literature 1: JP-H10-324929A
Patent Literature 2: JP-2017-75348A
Patent Literature 3: International Publication No. WO 2015/016145 Non Patent Literature

Non Patent Literature 1: Takayuki MAEDA and Yoichi ONO: Tetsu-to-Hagane, 72(1986)7, pp. 775-782
Non Patent Literature 2: Takazo KAWAGUCHI, Shun SATO, and Kozo TAKADA: Tetsu-to-Hagane, 73(1987)15, pp.

1940-1947

Non Patent Literature 3: Shun SATO, Takazo KAWAGUCHI, Minoru ICHIDATE, and Mayumi YOSHINAGA: Tetsu-to-Hagane, 73(1987)7, pp. 804-811

Summary of Invention

Technical Problem

From the conventional technologies, it is found that a pore structure affects the reducibility and reduction-degradation property and thus controlling the pore structure is important.

However, it is commonly known that there is a contradictory relationship between improving reducibility and achieving a low reduction-degradation property and that if reduction-degradation is suppressed, reducibility would decrease.

That is, to achieve both high reducibility and a low reduction-degradation property, it is necessary to control the porosity ranging from macropore porosity to micropore porosity as well as the pore structure. However, each of the conventional technologies focuses only on the porosity in a certain range, and no attempt has been made to perform such control. Thus, it has been a task to propose a pore structure that can achieve both high reducibility and a low reduction-degradation property.

The object of the present invention is to provide a sintered ore for use in a blast furnace method or for direct reduction, particularly to provide a sintered ore or a sintered ore for hydrogen reduction, each of which achieves high reducibility and a low reduction-degradation property and to propose a method for producing the sintered ore or the sintered ore for hydrogen reduction.

Solution to Problem

The inventors have grasped a pore structure that contributes to achieving both high reducibility and a low reduction-degradation property, and attempted to construct a new concept on pores that can achieve both high reducibility and a low reduction-degradation property.

A sintered ore according to the present invention that advantageously solves the above problems has a ratio $P_A/P_B$ of 0.23 or more, where $P_A$ represents a porosity (volume%), measured by mercury porosimetry, of particles of the sintered ore that have a size of 5 mm or more and are ground to an average particle size of 1 to 2 mm, and $P_B$ represents the porosity (volume%) of the particles of the sintered ore determined using an apparent density measured by an in-liquid weighing method using water, and using a real density, measured by a boiling method or a vacuum suction method, of the particles of the sintered ore that are ground and sieved into a particle size of less than 250 $\mu$m.

In addition, the sintered ore according to the present invention may include the following feature, for example, as a solution means that is considered to be more preferable.

(a) The porosity $P_A$ is in the range of 3 to 13 volume%.
(b) The porosity $P_B$ is in the range of 10 to 42 volume%.
(c) A mean pore size $d_A$, as measured by the mercury porosimetry, is 0.7 $\mu$m or less.

A sintered ore for hydrogen reduction according to the present invention that advantageously solves the above problems is characterized in that the porosity ratio $P_A/P_B$ in any one of the above sintered ores is 0.25 or more.

A method for producing a sintered ore according to the present invention that advantageously solves the above problems is a method for producing any one of the above sintered ores, including using a raw material containing an ore having a crystal water content of 4 mass% or more. The method for producing the sintered ore according to the present invention may include the following feature as a solution means that is considered to be more preferable: blowing in gaseous fuel as sintering fuel, and the gaseous fuel is any combustible gas selected from among hydrogen gas, blast furnace gas, coke oven gas, blast furnace-coke oven mixed gas, town gas, natural gas, methane gas, ethane gas, propane gas, butane gas, and a mixed gas thereof.

A method for producing the sintered ore for hydrogen reduction according to the present invention that advantageously solves the above problems is characterized by setting the porosity ratio $P_A/P_B$ of the sintered ore to 0.25 or more in the method for producing any one of the above sintered ore.

Advantageous Effects of Invention

With the sintered ore and the sintered ore for hydrogen reduction according to the present invention, it is possible to control the pore structure to obtain a sintered ore and a sintered ore for hydrogen reduction each having both high reducibility and a low reduction-degradation property. Thus, such sintered ores are suitable as a raw material for the blast furnace method or for the direct-reduction ironmaking method performed with, for example, a shaft furnace. In addition, with the method for producing the sintered ore and the method for producing the sintered ore for hydrogen reduction according to the present invention, it is possible to appropriately control the pore structure of the sintered ore.

Brief Description of Drawings

[Fig. 1] Fig. 1 is a flowchart of a method for measuring the porosity of a sintered ore according to an embodiment of the present invention.

[Fig. 2] Fig. 2 is a graph illustrating the relationship between the JIS reduction index (JIS-RI) and the reduction-degradation index (JIS-RDI) of a sintered ore.

[Fig. 3] Fig. 3 is a graph illustrating the relationship between the micropore porosity $P_A$ and the JIS reduction index (JIS-RI).

[Fig. 4] Fig. 4 is a graph illustrating the relationship between the micropore porosity $P_A$ and the reduction-degradation index (JIS-RDI).

[Fig. 5] Fig. 5 is a graph illustrating the influence of the ratio $P_A/P_B$ between the micropore porosity and the macropore porosity on the ratio JIS-RI/JIS-RDI between the JIS reduction index and the reduction-degradation index.

[Fig. 6] Fig. 6 is a graph illustrating the influence of the mean pore size, as measured by mercury porosimetry, of a sintered ore in which the ratio $P_A/P_B$ between the micropore porosity and the macropore porosity is 0.25 or more on the ratio JIS-RI/JIS-RDI between the JIS reduction index and the reduction-degradation index.

Description of Embodiments

Hereinafter, an embodiment of the present invention will be specifically described with reference to the drawings. The following embodiment only illustrates examples of a method and so on for embodying the technical idea of the present invention. Thus, the configuration of the present invention is not limited thereto. That is, the technical idea of the present invention may be changed in various ways within the technical scope recited in the claims.

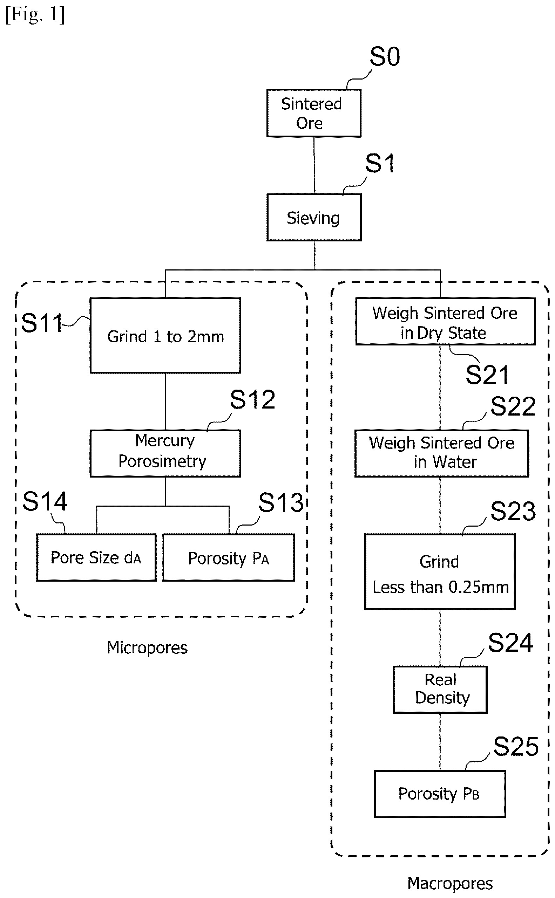

The inventors have measured and quantified micropores having a pore size of 200 $\mu$m or less which affect the reducibility of a sintered ore, and macropores which affect influence on the strength of a sintered ore. Then, the inventors have studied preferable properties for a sintered ore, in particular, a sintered ore for hydrogen reduction. Fig. 1 shows the flow of the evaluation method.

A sintered ore product having a particle size of +5 mm is used as sintered ore S0 to be used for a porosity measurement target. Herein, "having a particle size of +5 mm" represents remaining on a 5mm-mesh sieve after sieving. Meanwhile, for example, "having a particle size of -5 mm" represents under the 5-mm mesh sieve after sieving. First, the sintered ore S0 is sieved as appropriate to obtain a uniform particle size in the range of about 19 to 21 mm, for example (S1). Herein, any finished sintered ore with a particle size of +5 mm may be used, regardless of its particle size or regardless of whether the ore has been sieved. Achieving a uniform particle size in a certain range can reduce the load on the subsequent grinding process.

The micropore porosity $P_A$ and its pore size $d_A$ of the obtained sintered ore S1 with a uniform particle size are measured as follows.

(S11) The sintered ore S1 is ground and is then sieved into a particle size of 1 mm or more but less than 2 mm. The grinding method herein is preferably performed with a grinding machine that does not cause particles, which have been ground into a predetermined particle size or less, to be further ground into a smaller particle size, such as a disk mill or a jaw crusher.

(S12) The pore size distribution of the obtained sintered ore having a particle size of 1 mm or more but less than 2 mm is measured by mercury porosimetry according to JIS R1655:2003, so that the porosity $P_A$ (S13) and the mean pore size $d_A$ (S14) are determined from the cumulative pore volume of micropores having a pore size of 3.6 nm to 200 $\mu$m. Herein, the pore size is determined by assuming that an open pore has a cylindrical shape and calculating the diameter of the cylinder using the Washburn equation of Expression (1) below. In addition, the mean pore size $d_A$ is the value corresponding to 50% of the cumulative volume criterion.

$$d = -4\sigma(\cos\theta)/P \qquad (1),$$

where d represents the pore size (m), $\sigma$ represents the surface tension (N/m) of mercury, $\theta$ represents the contact angle (°) between the measured sample and the mercury, and P represents the pressure (Pa) applied to the mercury.

The macropore porosity $P_B$ of the obtained sintered ore S1 with a uniform particle size is measured as follows.

(S21) The apparent density of the sintered ore S1 is measured by the in-liquid weighing method based on Archimedes' principle according to JIS Z8807:2012. First, the sintered ore S1 is weighed in a dry state.

(S22) Next, the same sintered ore S1 is weighed in water. The apparent density of the sintered ore S1 is determined using the in-liquid weighing method based on the density at the measured temperature of water as a reference material.

(S23) The sintered ore S1 is ground and then sieved to have a particle size of -250 $\mu$m. Then, the real density of the obtained sintered ore S1 is measured based on the boiling method or the vacuum suction method according to JIS R1634:1998.

(S24) The apparent density of the sintered ore S1 and the real density of the ground sintered ore S1 are compared to calculate the macropore porosity $P_B$.

(Example)

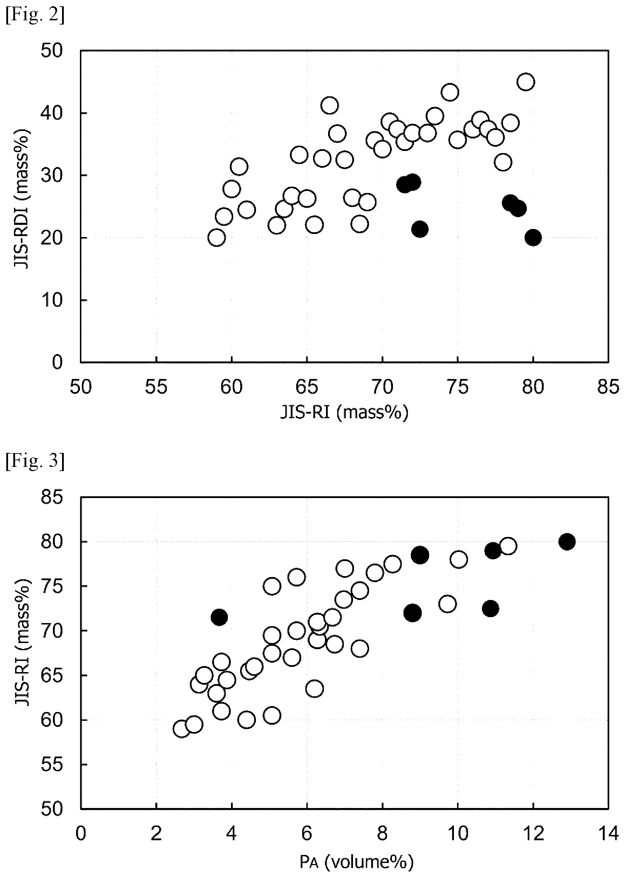

Sintered ores were produced by mixing various raw materials shown in Table 1 within the range of the component composition specified therein under various operating conditions and collected from samplers of the actual sintering machine. For the reducibility of each sintered ore, the reduction index JIS-RI (mass%) was measured according to JIS M8713:2009. Meanwhile, for the reduction-degradation property of each sintered ore, the reduction-degradation index JIS-RDI (mass%) was measured according to JIS M8720:2017. Fig. 2 is a graph showing the relationship between the reducibility and the reduction-degradation property of the sintered ores produced with the various mixing ratios of the compositions and under the various operating conditions. The abscissa axis indicates the reduction index JIS-RI as the reducibility, and the ordinate axis indicates the reduction-degradation index JIS-RDI as the reduction-degradation property. A sintered ore produced with a typical mixing ratio of the compositions and under a typical operating condition exhibits a positive correlation as plotted in hollow circles (O). The higher the reduction index JIS-RI, the better. Conversely, the lower the reduction-degradation index JIS-RDI, the better. This means that there is usually a contradictory relationship between the reducibility and the reduction-degradation property and that it is therefore difficult to satisfy both properties at the same time. Meanwhile, some sintered ores showed both superior reducibility and a superior reduction-degradation property as plotted in solid circles (•). Therefore, the relationship between such properties and the porosity was examined.

[Table 1]

| | Component composition [mass%] | | | | | |
|---|---|---|---|---|---|---|
| | T. Fe | FeO | SiO$_2$ | CaO | Al$_2$O$_3$ | MgO |
| Maximum value | 59 | 10 | 6 | 12 | 2.5 | 1.8 |
| Minimum value | 56 | 4 | 4 | 9 | 1.2 | 0.2 |

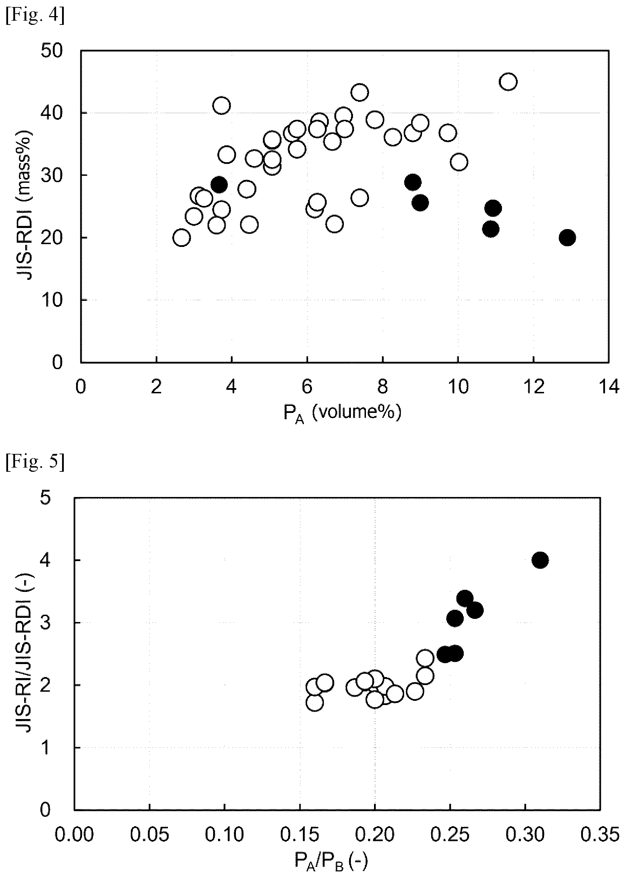

Figs. 3 and 4 are graphs showing the relationship between the micropore porosity $P_A$ and the reduction index JIS-RI and the relationship between the micropore porosity $P_A$ and the reduction-degradation index JIS-RDI, respectively. The relationship between the micropore porosity $P_A$ and the reduction index JIS-RI shows a positive correlation as with the conventional findings. Meanwhile, the relationship between the micropore porosity $P_A$ and the reduction-degradation index JIS-RDI shows no clear correlation. It is therefore difficult to obtain a sintered ore that is superior in both reducibility and reduction-degradation property only by controlling the micropore porosity.

The ratio (JIS-RI/JIS-RDI) between the reduction index and the reduction-degradation index was analyzed to examine, as an appropriate operating condition, the condition in which the sintered ore with a reduction index JIS-RI of 70 mass% or more was obtained. The larger the value, the more it is possible to obtain a condition that can achieve both reducibility and reduction-degradation property.

As a result of organizing with the ratio ($P_A/P_B$) between the micropore porosity and the macropore porosity, it was found possible to obtain a condition that can achieve both appropriate reducibility and appropriate reduction-degradation property. Fig. 5 is a graph illustrating the influence of the ratio $P_A/P_B$ between the micropore porosity and the macropore porosity on the ratio JIS-RI/JIS-RDI between the JIS reduction index and the JIS reduction-degradation index. It is found that setting the porosity ratio $P_A/P_B$ to 0.23 or more can obtain a sintered ore that has a ratio JIS-RI/JIS-RDI of 2.0 or more and thus is superior in both the reducibility and the reduction-degradation property. Further, setting the porosity ratio $P_A/P_B$ to 0.25 or more can achieve a ratio JIS-RI/JIS-RDI of 2.5 or more, which is preferable for a sintered ore for hydrogen reduction. Note that the upper limit of the porosity ratio $P_A/P_B$ is not specified, but is preferably determined based on the preferable ranges of the micropore porosity $P_A$ and the macropore porosity $P_B$ described below.

As shown in Fig. 3, when the micropore porosity $P_A$ is less than 3 volume%, it is difficult to achieve a reduction index JIS-RI of 70 mass% or more. Meanwhile, when $P_A$ is more than 13 volume%, adjacent micropores become close to each other, which may reduce the strength of the sintered ore. Therefore, the micropore porosity $P_A$ is preferably in the range of 3 to 13 volume%.

In addition, it is difficult, in principle, to produce a sintered ore having a macropore porosity $P_B$ of less than 10 volume%. Meanwhile, a sintered ore having $P_B$ of more than 42 mass% has a reduction index JIS-RI that is too low or a reduction-degradation index JIS-RDI that is too high, and thus has a poor balance. Thus, the macropore porosity $P_B$ is preferably in the range of 10 to 42 volume%.

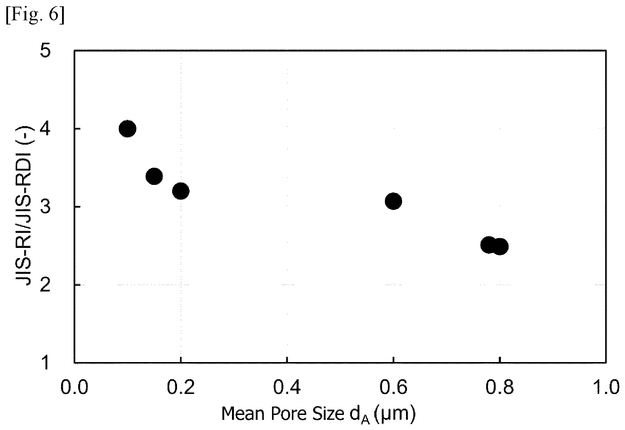

Fig. 6 shows the relationship between the mean pore size $d_A$ of micropores and the ratio JIS-RI/JIS-RDI between the JIS reduction index and the reduction-degradation index of a sintered ore having a good balance of reducibility and reduction-degradation property. Setting the mean pore size $d_A$ to 0.7 $\mu$m or less can increase the strength of a sintered ore, and can achieve the more superior balance of reducibility and reduction-degradation property of the sintered ore. The lower limit of the mean pore size $d_A$ is not limited to a particular value, but is preferably about 0.1 $\mu$m, considering the foregoing preferable range of the micropore porosity.

A common method can be applied to the production of a sintered ore. Among all, using ore with a crystal water content of 4 mass% or more, and evaporating the crystal water in the sintering process can produce fine pores in the resulting sintered ore, and thus can increase the micropore porosity $P_A$, which is preferable.

Further, blowing in gaseous fuel as a sintering fuel can increase the amount of melt in the sintering process, thereby reducing the macropore porosity $P_B$ and also reliably producing fine pores, which is preferable. Herein, the gaseous fuel is preferably any combustible gas selected from a group consisting of hydrogen gas, blast furnace gas, coke oven gas, blast furnace-coke oven mixed gas, town gas, natural gas, methane gas, ethane gas, propane gas, and butane gas; and a mixed gas thereof.

Industrial Applicability

According to the sintered ore and the method for producing the same, and the sintered ore for hydrogen reduction and the method for producing the same according to the present invention, it is possible to improve the reducibility and reduction-degradation property in a well-balanced manner by appropriately controlling the proportions of micropores and macropores. When the obtained sintered ore is used for a blast furnace, a stable operation can be performed, while when the obtained sintered ore is used for hydrogen reduction, in particular, an iron source with reduced carbon dioxide emissions can be obtained. Thus, such sintered ore is industrially advantageous from the perspective of reducing environmental burdens.

**Claims**

1.  A sintered ore having a ratio $P_A/P_B$ of 0.23 or more, where $P_A$ represents a porosity (volume%), measured by mercury porosimetry, of particles of the sintered ore that have a size of 5 mm or more and are ground to an average particle size of 1 to 2 mm, and $P_B$ represents the porosity (volume%) of the particles of the sintered ore determined using an apparent density measured by an in-liquid weighing method using water, and using a real density, measured by a boiling method or a vacuum suction method, of the particles of the sintered ore that are ground and sieved into a particle size of less than 250 $\mu$m.

2.  The sintered ore according to claim 1, wherein
    the porosity $P_A$ is in a range of 3 to 13 volume%.

3.  The sintered ore according to claim 1 or 2, wherein
    the porosity $P_B$ is in a range of 10 to 42 volume%.

4.  The sintered ore according to any one of claims 1 to 3, wherein
    a mean pore size $d_A$, as measured by the mercury porosimetry, is 0.7 $\mu$m or less.

5.  A sintered ore for hydrogen reduction, **characterized in that**
    the porosity ratio $P_A/P_B$ in the sintered ore according to any one of claims 1 to 4 is 0.25 or more.

6.  A method for producing the sintered ore according to any one of claims 1 to 4, wherein
    a raw material including an ore with a crystal water content of 4 mass% or more is used.

7.  The method for producing the sintered ore according to claim 6, comprising blowing in gaseous fuel as sintering fuel.

8. The method for producing the sintered ore according to claim 7, wherein
the gaseous fuel is any combustible gas selected from a group consisting of hydrogen gas, blast furnace gas, coke oven gas, blast furnace-coke oven mixed gas, town gas, natural gas, methane gas, ethane gas, propane gas, and butane gas; and a mixed gas thereof.

9. A method for producing the sintered ore for hydrogen reduction, wherein
the porosity ratio $P_A/P_B$ of the sintered ore is set to 0.25 or more in the method for producing the sintered ore according to any one of claims 6 to 8.

[Fig. 1]

Micropores

Macropores

[Fig. 2]

[Fig. 3]

[Fig. 4]

[Fig. 5]

[Fig. 6]

# EP 4 556 583 A1

<table>
<tr><td colspan="2" align="center"><strong>INTERNATIONAL SEARCH REPORT</strong></td><td>International application No.<br><br><strong>PCT/JP2022/029424</strong></td></tr>
</table>

**A. CLASSIFICATION OF SUBJECT MATTER**

*C22B 1/16*(2006.01)i; *C21B 13/02*(2006.01)i
FI: C22B1/16 R; C21B13/02; C22B1/16 N

According to International Patent Classification (IPC) or to both national classification and IPC

**B. FIELDS SEARCHED**

Minimum documentation searched (classification system followed by classification symbols)

C22B1/16; C21B13/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-106064 A (NIPPON STEEL & SUMITOMO METAL CORP.) 15 June 2017 (2017-06-15)<br>claims, paragraph [0001] | 1-9 |
| A | JP 2007-100150 A (JFE STEEL CORP.) 19 April 2007 (2007-04-19)<br>claims | 1-9 |
| A | JP 2009-149942 A (KABUSHIKI KAISHA KOBE SEIKO SHO) 09 July 2009 (2009-07-09)<br>table 2 | 1-9 |
| A | JP 2007-327096 A (NIPPON STEEL CORP.) 20 December 2007 (2007-12-20)<br>table 4 | 1-9 |
| A | JP 2000-178660 A (NKK CORP.) 27 June 2000 (2000-06-27)<br>table 6 | 1-9 |
| A | JP 2002-129247 A (NKK CORP.) 09 May 2002 (2002-05-09)<br>table 3 | 1-9 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 October 2022** | **18 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

13

INTERNATIONAL SEARCH REPORT

Information on patent family members

International application No.

**PCT/JP2022/029424**

| Patent document cited in search report | | | Publication date (day/month/year) | Patent family member(s) | Publication date (day/month/year) |
|---|---|---|---|---|---|
| JP | 2017-106064 | A | 15 June 2017 | (Family: none) | |
| JP | 2007-100150 | A | 19 April 2007 | (Family: none) | |
| JP | 2009-149942 | A | 09 July 2009 | US 2010/0206131 A1 table 2 <br> WO 2009/081784 A1 <br> EP 2239344 A1 <br> KR 10-2010-0084576 A <br> CN 101896627 A <br> TW 200948979 A | |
| JP | 2007-327096 | A | 20 December 2007 | (Family: none) | |
| JP | 2000-178660 | A | 27 June 2000 | (Family: none) | |
| JP | 2002-129247 | A | 09 May 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10324929 A
- JP 2017075348 A
- WO 2015016145 A

**Non-patent literature cited in the description**

- **TAKAYUKI MAEDA** ; **YOICHI ONO**. *Tetsu-to-Hagane*, 1986, vol. 72 (7), 775-782
- **TAKAZO KAWAGUCHI** ; **SHUN SATO** ; **KOZO TAKADA**. *Tetsu-to-Hagane*, 1987, vol. 73 (15), 1940-1947
- **SHUN SATO** ; **TAKAZO KAWAGUCHI** ; **MINORU ICHIDATE** ; **MAYUMI YOSHINAGA**. *Tetsu-to-Hagane*, 1987, vol. 73 (7), 804-811